# EUROPEAN PATENT APPLICATION

(11) **EP 1 742 476 A1**
(43) Date of publication of application: **10.01.2007**
(21) Application number: 05300562.5
(22) Date of filing: 06.07.2005
(51) Int. Cl.: H04N 7/24

(54) **Scalable video coding streaming system and transmission mechanism of the same system**

(71) Applicant: Thomson Licensing, 92100 Boulogne-Billancourt (FR)
(72) Inventor: Gao, Kui, 100080, Beijing (CN); Xie, Kai Bld. 4A, Hai Dian District 100086 Beijing (CN); Wang, Charles Rm 03-09,8F, Building A, Hai Dian District 100085 Beijing (CN)
(74) Representative: Rossmanith, Manfred

(57) **Abstract**

A scalable video coding (SVC) streaming system comprises a SVC encoder, a SVC sender server, a network, and at least one client terminal. The SVC sender server includes a first sender buffer for transmission of a base layer bitstream and a second sender buffer for transmission of enhancement layer bitstreams. The client terminal includes a receiver having a first receiver buffer for receiving the base layer bitstream transmitted from the first sender buffer in RTP through TCP session over the network and a second receiver buffer for receiving enhancement layer bitstream transmitted from the second sender buffer in RTP through UDP session over the network. A transmission mechanism for transmission of scalable video coding (SVC) streams comprises steps of transmitting a base layer bitstream in RTP through TCP session over the network to the client terminal; and transmitting multiple enhancement layers bitstreams in RTP through UDP session over the network to the client terminal.

## Description

### FIELD OF THE INVENTION

The present invention relates to a scalable video coding streaming system for transmission of SVC streams over wireless/wired network, and a transmission mechanism of the same system.

### BACKGROUND OF THE INVENTION

With the development of multimedia computing and communication technologies, it is feasible to provide streaming media services over the Internet.

For most applications of streaming over the Internet, the fundamental technical problem is that the network bandwidth varies in a wide range from one user to another (user variations) and from time to time (temporal variations). The major advantage of the SVC scheme is its bandwidth adaptation capability that provides a good solution for bandwidth fluctuation. With the rapid development of wireless/wired communications, the transmission channels become an increasingly popular and convenient means to access the Internet. They are typically noisy and suffer from a number of channel degradations, such as random bit errors and burst errors due to fading and multiple path reflections. When compressed video data are sent over these channels, the effect of channel errors on the compressed video bitstream can be very servere. As a result, the video decoder that is decoding the corrupted video bitstream often loses synchronization. Moreover, predictive coding techniques such as motion compensation used in various video compression standards make the situation even worse. The decoders based on these techniques would quickly propagate the effects of channel errors across the video sequence and rapidly degrade video quality.

The scalable video coding (SVC) is developed as an extension of the ITU-T Recommendation H.264 | ISO/IEC International Standard ISO/IEC 14496-10 advanced video. Scalable video coding (SVC) provides a solution for the need of a video COding-DECoding scheme (codec) that is capable of serving a broad range of applications that require different quality levels, spatial and temporal resolutions of video. Generally, an SVC codec should provide at least the three main scalability functionalities: spatial resolution, temporal and quality (also known as SNR, i.e., Signal-to-Noise Ratio metric).

For applications involving transmitting video over error-prone channels, such as the wireless channels, the SVC framework provides a layered bitstream structure with different importance at different layers. In this layered bitstream structure, the most important information can be sent separately and with increased error protection compared to the less important enhancement information. There are basically two types of bitstreams in the SVC framework: the base layer bitstream, which can be decoded independently and provides the minimum video quality, and the enhancement layer bitstream, which can be decoded cumulatively and contribute to the improvement of video quality and can tolerate the channel errors.

The base layer bitstream is very sensitive to channel errors. Any random errors or burst errors may cause the decoder to lose synchronization, and the decoded errors will propagate to the start of the next GOP. However, the enhancement layers can tolerate the channel errors. When there are errors in the enhancement layer bitstream, an enhancement decoder can simply drop the rest of the enhancement bitstream of this frame and search for the next synchronization marker.

Scalable video streaming has timing constraints because of the sensitivity to delay and jitter. In a real-time SVC streaming system, every video picture/frame must meet its timing constraint typically specified as its deadline, after a streaming starts to playback. If the media data does not arrive or lose, the playback will be paused, which is annoying to human ears and eyes. Due to the limitation of available bandwidth and the transmission errors over the Internet, it is difficult to make all the packets to arrive the client on time.

Real-time Transport Protocol (RTP) is an Internet protocol for transmitting real-time data such as audio and video and provides end-to-end real-time data delivery services. RTP provides time stamping and sequence numbering to handle the timing issues in real-time data transport. RTP is usually transported via UDP (User Datagram Protocol), which is a protocol adapted to send independent packets of data, called datagrams, from one computer to another with no guarantees about arrival. UDP is also commonly used protocol today with multimedia applications, such as Internet phone, real-time video conferencing, and streaming of stored audio and video. All of these applications can tolerate a small fraction of packet loss, so that reliable data transfer is not absolutely critical for the success of the application. The most fatal problem is that UDP is not connection-based like TCP (Transmission Control Protocol). TCP is specifically designed to provide a reliable end-to-end byte stream over an unreliable internetwork. The IP layer gives no guarantee that datagrams will be delivered properly, the TCP session is used to time out and retransmit them as need be. The datagrams that do arrive may well do in the wrong order. TCP is also used to reassemble the datagrams into messages in the proper sequence. In short, TCP ensure completion of the reliable transmission of datagrams between two ends.

In the conventional streaming system, all the RTP packets are transmitted over the UDP session. As described herein before, this conventional streaming system does not define any transmission mechanisms for recovering of packet loss, which may result in incontinuous playback of video at client terminal. Therefore, it is desirable for the present invention to provide a reliable SVC streaming system and a transmission mechanism of the SVC streaming system.

### SUMMARY OF THE INVENTION

The present invention provides a system, which comprises a SVC encoder, a SVC sender server, a network, and at least one client terminal, characterized in that the SVC sender server includes a first sender buffer for transmission of a base layer bitstream and a second sender buffer for transmission of multiple enhancement layer bitstreams; the client terminal includes a receiver having a first receiver buffer for receiving the base layer bitstream transmitted from the first sender buffer in RTP through TCP session over the network and a second receiver buffer for receiving the multiple enhancement layer bitstream transmitted from the second sender buffer in RTP through UDP session over the network.

The present invention also provide a mechanism for transmission of scalable video coding (SVC) streams, which comprises steps of 1) transmitting a base layer bitstream in RTP from a first sender buffer through TCP session over a network to at least one client terminal; and 2) transmitting multiple enhancement layers bitstreams in RTP from a second sender buffer through UDP session over the network to the at least one client terminal.

Advantageously, since the base layer bitstream is transmitted through the TCP session, which is a connection-based protocol providing a reliable flow of datagrams between two computers, the packet loss of the base layer is recoverable, therefore, a continuous playback is achieved at the client ends.

### BRIEF DESCRIPTION OF DRAWINGS

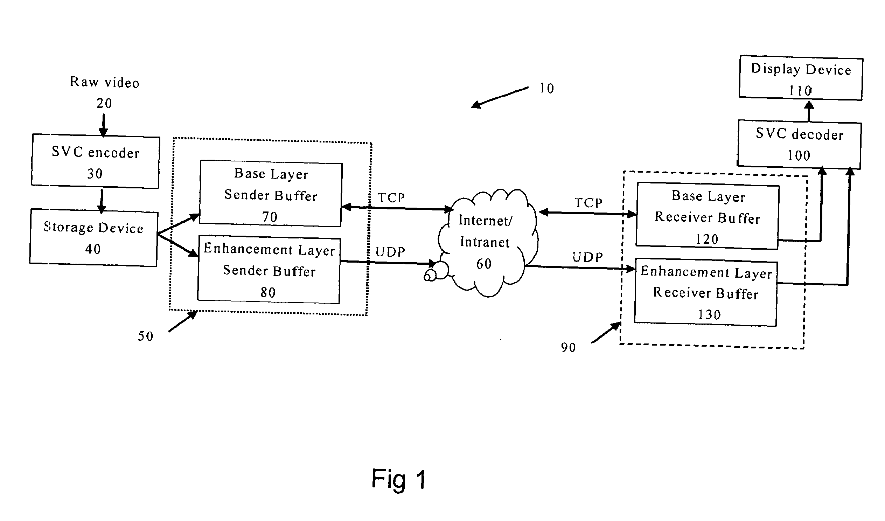

Fig. 1 is a schematic diagram showing the scalable video coding streaming system in accordance with the present invention.

### DETAIL DESCRIPTION OF PREFERRED EMBODIMENTS

As shown in Fig.1, a scalable video coding streaming system 10 in accordance with the present invention generally comprises a SVC encoder 30, a storage device 40, a SVC sender server 50, a transmission network 60 and at least one client terminal. The network 60 may involves wireless or wired internet and/or intranet. The client terminals may be any kinds of appliances which are accessible to the network 60, for example, personal computer, set-top-box, PDA (portable digital assistant) or PMD (portable multimedia player) etc.

Raw video 20 input in the SVC encoder 30 is encoded into SVC and stored in the storage device 40. The encoded data stored in the storage device 40 will be read by the SVC sender server 50 and packetized into RTP packets which are divided into a base layer and multiple enhancement layers.

Typically, the SVC sender server 50 includes a first sender buffer 70 for transmission of the base layer bitstream and a second sender buffer 80 for transmission of the enhancement layer bitstreams.

The client terminal normally includes a receiver 90, a SVC decoder 100 and a display device 110, wherein the receiver 90 comprises a first receiver buffer 120 for receiving of the base layer bitstream transmitted from the first sender buffer 70 and a second receiver buffer 130 for receiving of the enhancement layer bitstreams transmitted from the second sender buffer 80.

The transmission mechanism of the SVC streaming system in accordance with the present invention will be explained in detail as following.

First, the raw video input 20 is encoded by the SVC encoder 30 into SVC and stored in the storage device 40. When the SVC sender server 50 reads the data from the storage device 40, it will packetize the data into RTP packets which are divided into the base layer and multiple enhancement layers. The packetized base layer bitstream is put into the first sender buffer 70 and the packetized enhancement layer bitstreams are put into the second sender buffer 80.

Afterwards, the RTP packets of the base layer are sent out from the first sender buffer 70 of the sender server 50 over a TCP session through the Internet/intranet 60 to the client terminal, while, the RTP packets of the enhancement layer are sent out from the second sender buffer 80 of the sender server 50 over an UDP session through the Internet/Intranet 60 to the client terminal.

The RTP packets of the base layer are received through the first receiver buffer 120 of the client receiver 90. The RTP packets of the enhancement layer are received through the second receiver buffer 130 of the client receiver 90. Subsequently, the received RTP packets of base layer and enhancement layer will be decoded by the SVC decoder 100 and transmitted to the display device 120.

## Claims

1. A system for transmission of scalable video coding (SVC) streams, comprising a SVC encoder, a SVC sender server, a network, and at least one client terminal, **characterized in that**
- the SVC sender server includes a first sender buffer for transmission of a base layer bitstream and a second sender buffer for transmission of enhancement layer bitstreams;
- the client terminal includes a receiver having a first receiver buffer for receiving the base layer bitstream transmitted from the first sender buffer in RTP through TCP session over the network and a second receiver buffer for receiving enhancement layer bitstream transmitted from the second sender buffer in RTP through UDP session over the network.

2. The system as claimed in claim 1, **characterized in that** the network 60 includes wireless or wired internet and/or intranet.

3. The system as claimed in claim 1 or 2, **characterized in that** the client terminals are appliances accessible to the network 60

4. The system as claimed in claim 3, **characterized in that** the client terminal is selected from the group consisting of personal computer, set-top-box, PDA (portable digital assistant), and PMD (portable multimedia player).

5. A method for transmission of scalable video coding (SVC) streams, comprising steps of
- transmitting a base layer bitstream in RTP from a first sender buffer through TCP session over a network to at least one client terminal; and
- transmitting multiple enhancement layers bitstreams in RTP from a second sender buffer through UDP session over the network to the at least one client terminal.
